# EUROPEAN PATENT APPLICATION

(11) **EP 1 378 477 A1**
(43) Date of publication of application: **07.01.2004**
(21) Application number: 02712283.7
(22) Date of filing: 06.02.2002
(51) Int. Cl.: B66B 3/00, B66B 5/00, G05B 23/02

(54) **CONTROL DEVICE FOR ELEVATOR FACILITY, BUILDING FACILITIES REPAIRING METHOD AND CONTROL METHOD USING IT, AND ELEVATOR SYSTEM**

(30) Priority: 16.02.2001 JP 2001039349; 28.09.2001 JP 2001298991
(71) Applicant: Hitachi, Ltd., Chiyoda-ku, Tokyo 101-8010 (JP)
(72) Inventor: MITO, Hiroyuki, c/o Building Solution Division, Hitachinaka-shi, Ibaraki 312-0033 (JP); ONUMA, K., c/o Hitachi Building Systems Co., Ltd., Tokyo 101-8941 (JP); TOMITA, Nobuo, c/o Hitachi, Ltd., Tokyo 101-8010 (JP); TOMITA, K.,c/o Mito Bldng Syst. Div.Hitachi Ltd., Hitachinaka-shi, Ibaraki 312-0033 (JP); KOBAYASHI, N., c/o Blding. Sol.Div. Hitachi Ltd., Hitachinaka-shi, Ibaraki 312-0033 (JP)
(74) Representative: Strehl Schübel-Hopf & Partner
(86) International application number: PCT/JP2002/000962
(87) International publication number: WO 2002/064479

(57) **Abstract**

A building control function is combined with the ordinary control unit of an elevator as well as with the remote controller for the elevators fittings, and a communication interface is properly combined therewith. Utilising a network technique can offer a system to control and observe the building fittings from a man-machine device located in and out of the building. Applying a function to control a program distributed from the outside device and program modification can be offered after construction of the building fittings. Program modification is automatically carried out when fittings are connected. It becomes possible to offer simple operation from in and out of the building. Additional function, specification change, etc. are possible by means of some simple work such as connection after the fittings are already constructed. Construction cost, modification cost and maintenance fee are all reduced.

## Description

### Field of the Invention

The present invention relates to a control system for elevator installations provided with a function to control building installations and/or to supervise the building installations as well as a modification method for building installations utilizing the control system and an elevator system.

### Background of the Invention

As prior art there exists the Japanese unexamined patent publication Tokukaihei 7-160976. In this prior art, a building control system is provided with an elevator control board interface to communicate the elevator control board with the building control system to impart to the building control system a function to supervise and control the elevator, in addition to supervising and controlling the building installations.

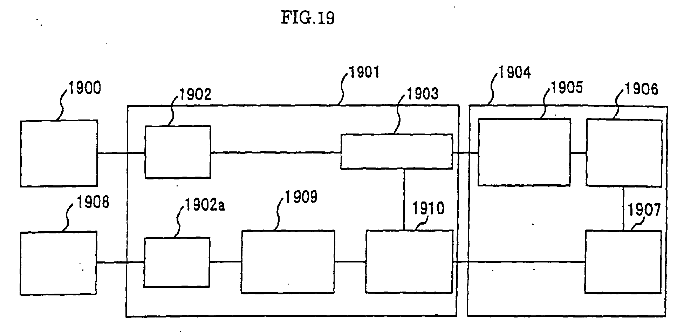

FIG. 19 is a block diagram showing prior art.

In FIG. 19, the reference numeral 1900 indicates air-conditioners, electric equipments, fire-proof installations and crime prevention equipments, etc. excepting elevators. The reference numeral 1901 indicates a local control unit consisting of the various building installations 1900 described as above and a data input/output part 1902 communicating with said various building installations 1900, and a communication part 1903 to communicate with a central control unit. A variation or an extraordinary signal of the input data is detected and transferred to a central control unit. The reference numeral 1904 indicates a central control unit to control the input data and supervise the various installations. The central control unit 1904 consists of a center communication unit 1905, a data control unit 1906 and a data indication unit 1907. The reference numeral 1908 indicates an elevator control board to detect a position of the elevator. The elevator control board indicates the position of the elevator by means of a lamp chasing movement of the elevator. The reference numeral 1902a indicates an input/output unit for elevator and elevator installations and the unit inputs the information whether an elevator palanquin exists or not in each floor.. The reference numeral 1909 indicates a data conversion unit to convert an information indicating existence of the elevator to a single value data and 1910 indicates a data control unit to determine whether the converted value data satisfies a predetermined condition or not. If the converted value is sufficient, the data control unit communicates the data to the central control unit via a communication unit 1903. The above explained building control system comprises a plurality of local control units and the central control unit. If required, the local control unit and the center unit are constructed by different system manufacturers and combined.

Next, actuation of the control system is explained.

Various installations 1900 in the building input various information with respect to running condition or analogue information to the input/output part 1902 of the local control unit 1901. In the local control unit 1901, a variation of the input data is detected and the input data are communicated from the communication unit 1903 to a center side communication part 1905 of the central control unit 1904. In the central control unit 1904, the input data are set in the data control unit 1906 and present status of each installation is indicated in the indication part 1907. Various controls of data are performed and some of the data indicating existence out of the stipulated scope or some extraordinary/obstacle data are detected. The most optimum control is performed to the installation in question according to the conditions informed. For instance, when the predetermined signal satisfies the predetermined condition, the predetermined devices are interlocked and controlled by means of an on/off actuation of the predetermined units. There are two interlock control mechanisms. One is performed by the central control unit 1904 and the other is performed by automatic distribution control such that between the local control unit 1901 communicated to the LAN (Local Area Network) such as Ethernet, the data are mutually communicated and the local control unit 1901 is imparted a control function in the above interlock control. Further, when a stoppage of electric current, an earthquake or a fire is occurred, an alarm is raised to control the units according to each control unit operation.

Meanwhile, as for an operation status of the elevator, the elevator control board 1908 periodically detects the data whether the palanquin exists or not in each floor. And the elevator control board 1908 inputs the data into the elevator installations input/output part 1902a of the local control unit 1901. The input data are converted to a simple value data indicating the floor where the palanquin of the elevator exists in a data conversion part 1909. Location of each palanquin of the elevator is automatically indicated by means of a lamp on the elevator control board 1908 of each floor. When some earthquakes, stoppage of electric current, fires, etc. are occurred, for instance, if stoppage of electric current occurred, each palanquin of the elevator is transferred to the predetermined floor by means of a private generator. If an earthquake is occurred, all the palanquins of the elevators are carefully controlled and transferred to the ground floor respectively by means of the elevator control board 1908.

In recent years, environmental conditions surrounding the buildings rapidly changed and various demands were offered from the technical point of view by skilled persons with respect to the buildings.

The above mentioned prior art offers various building control systems provided with various elevator installations input/output unit to prevent an increase of the amounts of the data to be transferred. However, this system needs a building installations control system as well as an elevator control board. The system increases number of works in building site and consequently increases construction term. The system increases its installation cost in building as a matter of course.

Further, in the conventional building construction work the in-building installations to be communicated are already predetermined. Therefore, if new additional supervising and controlling systems for the building installations are required, additional installation working or replacing work for the corresponding local control system is required. It is also inevitably required to modify the programs of the local control system already installed in the building. In case the building control system comprises a plurality of different system manufacturers it is necessary to add or replace the system or systems in accordance with respective manufacture. Working efficiency is remarkably poor. In general, modification of the building installations requires higher cost. Reconstruction work of the control system is inevitably disturbed.

Building construction industry is required to improve chronic shortage of manpower and demands of reduction of maintenance cost. It is required to control the building installations by means of a central control unit to reduce number of control workers but it is still not easy to control arrangement in interface of the building installations by means of a central control unit.

### Disclosure of Invention

The subject of the present invention is to offer a control system for elevator installations and modification method of the building installations and elevators system utilizing the control system.

In order to solve the above subject it is offered to add a supervising and controlling function for the building installation, except elevators, to a control system for elevators and/or a control unit for elevators fitting installations. Said control system can afford to provide with an ability to supervise and control the building installations when the building is constructed. If an additional supervising and controlling system is required during or after the building was constructed said control system can reduce the cost for installation of the building control system.

In particular, when a new building is constructed, an additional building is required, a new construction in place of an old construction is required, an addition of a new building control function is required to a control system to supervise and control the elevator installations, the control system of the present invention will greatly reduce the construction cost.

If a new control system of the building installations is interlocked, an automatic arrangement of supervising and controlling program is introduced from outside and it becomes possible to automatically edit the supervising and controlling programs. It is also possible to indicate a result of supervising and controlling of the building installations in personal computer, portable telephone, etc. in home page form through the information network.

The present invention is applied for a control system for elevator installations including passenger conveyer such as an elevator, escalator (moving staircase), etc. The object to offer a control system for elevator installations is mainly to control elevator installations and/or to supervise the same. It is also available to control building installations and/or to supervise the same.

### Brief Explanation of the Drawings

- FIG.1: is a block diagram showing a whole construction of elevator installations.
- FIG.2: is a hardware block diagram of a preferred embodiment.
- FIG.3: is a block diagram indicating a supervising service for elevators..
- FIG.4: is a control block diagram of calculation of a preferred embodiment.
- FIG.5: is PAD figure indicating supervising elevator and calculation in control program.
- FIG.6: is a control block diagram of calculation relating to preparation of a home page and transformation thereof to indicate to man-machine device to supervise and control the installations.
- FIG.7: is PAD figure indicating a calculation in home page transferring part.
- FIG.8: is PAD figure indicating a calculation in home page man-machine part.
- FIG.9: is PAD figure indicating a calculation in home page editing part.
- FIG.10: is PAD figure indicating a calculation in programs of supervising building installations and controlling program.
- FIG.11: is a block diagram indicating a distribution function of service program of distribution server of service program.
- FIG.12: is a control block diagram to control service program part distributed from a service program distribution server in the program control performance part.
- Fig.13: is a control block diagram for the function to perform a service program corresponding to installations to automatically recognize connection of installations when installations are connected.
- FIG.14: is a diagram indicating a construction of a service program.
- FIG.15: is a flow chart of event treatment in distribution server of service program.
- FIG.16: is a flow chart of event treatment routine including service program performance treatment in the embodiment.

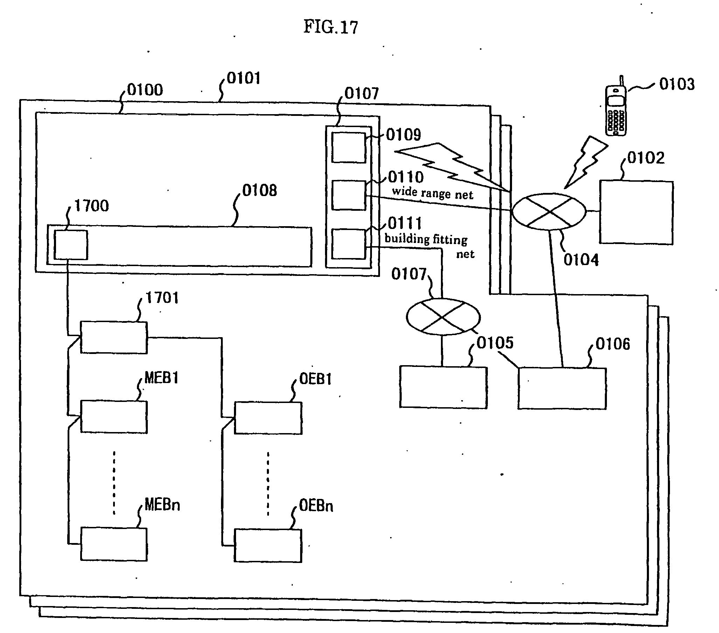

- FIG.17: is a block diagram to indicate a whole construction provided with a function to supervise and control the building installations to a remote control device for the elevator installations or provided with a function to distribute the building installations information to the building.
- FIG.18: is a control block diagram indicating a remote control unit for the elevator installations provided with a function of supervising and controlling or a device of embodiment provided with a function to distribute building installations information into the building.
- FIG.19: is a block diagram of prior art.
- FIG.20: is a drawing indicating an installation site of the control system for the elevator installations and a network for elevators.
- FIG.21: is an example of the control system provided with a function to control elevators.
- FIG.22: is an example of the control system not provided with a function to control elevators.

### The Preferred Embodiments to Perform the Invention

Now a preferred embodiment according to the present invention is explained with reference to the accompanying drawings

### (Example 1)

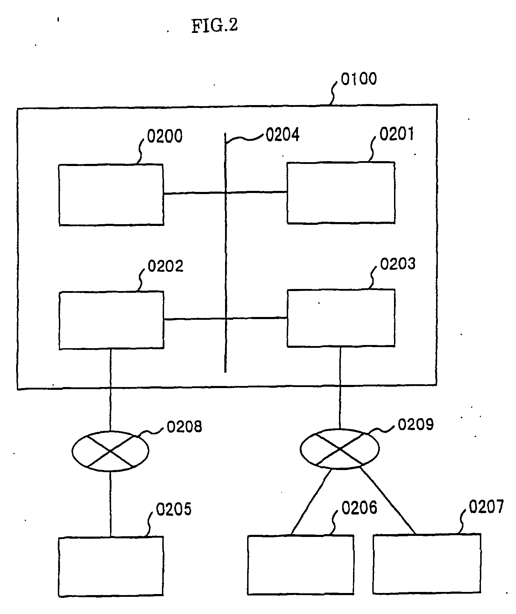

FIG.2 indicates a block diagram of a hardware construction of a control system for building installations performed in the present invention.

The control system for elevator installations comprises a central control unit 0200, a storage unit 0201, and a installation network interface unit 0203. Each unit is communicated by means of a bus 0204. The central control unit 0200 is a device to practice a program stored in storage unit 0201. The central treatment unit properly controls the storage unit 0201, a equipment network interface device 0202 and the information network interface unit 0203. The storage 0201 is a memory device such as ROM, RAM, etc. The storage unit 0201 is a device to store a calculator program to perform a function of the control unit 0100 for elevator installations and practice state of the calculator. The equipment network interface unit 0202 indicates an elevator communication interface device to connect elevators through equipment network 0208. It also indicates a elevator interphone interface device to connect to elevator interphone. or supervising camera interface device to connect to the supervising camera., or building equipment network interface device to connect to the control object 205 in building installations For instance, the building equipment network interface device indicates a LON controller to perform a protocol treatment by means of the LONWORKS of the field network to connect the building installations, or an electric current wire modem, or a wireless apparatus. The information network interface unit 0203 indicates a building group control device through public circuit or the information network 0209 such as Ethernet or the like or a man-machine unit 0206 such as mobile PC, PHS, portable telephone, etc. or wide range network interface device to conthe service program distribution server 0207, or information network interface device in and out of the building. For instance, a wide range network interface device indicates a modem device to connect to the public circuit or the PHS modem device to wireless connection to the PHS circuit. The information network interface devices in and out of building are Ethernet controllers.

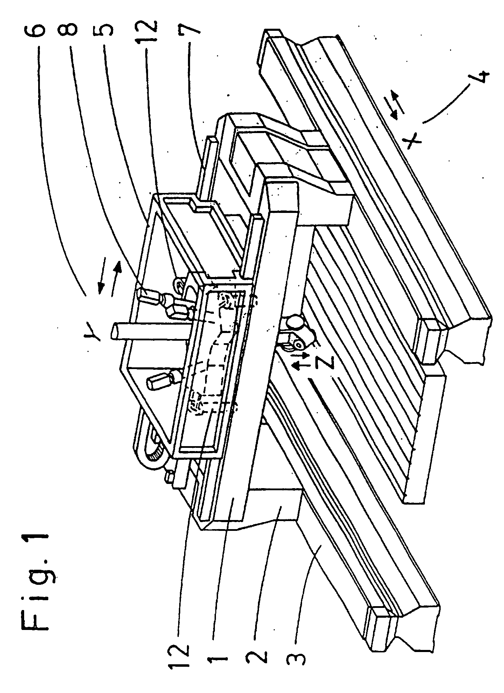

FIG.1 is a block diagram indicating the whole construction of the elevator system including a control device of elevator installations according to the present invention.

The elevator system according to the present invention comprises a control unit 0100 for elevator installations (hereinafter referred to a control unit 0101), at least one or a plurality of elevators EV1, EV2, ... Evn, at least one or a plurality of elevator fittings E1, E2, ... En, at least one or a plurality of various building installations B1, B2, ..., Bm, a network 0107 in the building, an information PC 0105, a dialup router 0106, a wide range network 0104, a building group control center 0102, PHS, or a portable telephone 0103.

The control device 0100 is a controller to control the information PC 0105, the signal from the building group control center 0102, or the control unit 0100 controls the elevator EV1, EV2, ..., EVn, the elevator fittings E1, E2, ..., En, building fittings B1, B2, ..., Bm based on a previously provided control operation function. The control device 0100, as an equipment network interface device 0202, includes an elevator communication interface 0112, an elevator fittings interface unit 0113 and building network interface unit 0114, and as a information network interface device 0203, it includes a inter-building network interface nit 0111, a wide range network interface unit 0110 and a PHS modem 109. It is important in the equipment network 0208 a guarantee of control response time in order to maintain a quality of real time ability.. The elevators EV1, EV2, ..., Evn are controlled by the control unit 0100. In case of different manufacturer's elevators, the elevator sometimes connects to the control device 0100. The elevator fittings E1, E2, ..., En are provided as elevator fittings such as observation camera, inter phone in the elevator palanquins. The building installations B1, B2, ..., Bm indicate fittings to control building fittings such as air conditioning control device, electric power control device, illumination control device, fire observation device. The inter-building network 0107 is a network provided in the building and indicates Ethernet etc. The information PC 0105 is a device to observe internal building and to control The dialup router 0106 is a device to perform dialup connection with the wide range network 0104. The wide range network 0104 is a network to input or output various information with external sources. The wide range network 0104 indicates a general telephone circuit, a portable telephone circuit, PHS telephone circuit,. internet, CATV network, or satellite communication circuit, etc. The building group control center 0102 is a device to supervise and control the building group through the wide range network 0104. The information PC 0105 is a man-machine device to supervise and control the elevators EV1, EV2, ..., EVn elevator fittings E1, E2, ..., En, and building installations B1, B2, ..., Bm. For instance, the information PC 0105 indicates information to observe and control in the form of home page format to perform input and output actuation. The building group control center 0102 is a device to observe and control the building groups uniformly and perform distribution work of the service program part 0407.

The PHS modem 0109 of the control unit 0100 provided in the building 0101 or a wide range network interface unit 0110 is connected to the building group control center 0102, PHS, and the portable telephone 0103 through the wide range network 0104. The number of control unit 0100, the building group control center 0102, PHS, as well as portable telephone 0103 may be plural numbers. The information PC 0105 or the dialup router 0106 is connected to a inter-building network interface unit 0111 of the control unit 0100 through inter-building network 0107. At least one or a plurality of elevators EV1, EV2, ..., EVn are connected to a elevator communication interface unit 0112. At least one or a plurality of the elevator fittings E1, E2, ..., En are connected to the elevator fittings interface unit 0113. At least one or a plurality of building fittings B1, B2, ..., Bm are connected to the building fittings network interface unit 0114 by means of serial communication such as RS-232

Next,, a brief explanation to supervise and control elevators and building fittings is made with reference to the accompanying drawing of FIG. 1. The actuation of the device according to the present invention is explained.

The control unit 0100 performs the following works. The control device 0100 calculates the signal output from the elevator communication interface unit 0112, or the signal output from the elevator interphone, or elevator fittings interface unit 0113 such as observation camera, or signal from the internetwork interface unit 0111 to which the information PC 0105 is connected through the inter-building network 0107, or the building group control center 0102 and the wide range network interface unit 0110 to which the portable telephone 0103 through the wide range network 0104, as well as PHS, or the wide range network interface unit 0110 to which the portable telephone 0103 is connected. The control unit 0100 performs calculation of the above mentioned input signals. As a result of such calculation, the control unit 0100 issues a control output to the elevator fittings interface unit 0113, or the elevator communication interface unit 0112 or the building fittings network interface unit 0114 and also output data to the inter-building information network interface unit 0111, or the wide range network interface device 0110. The control unit 0100 issues various ordinary or extraordinary information concerning status of elevators EV1, EV2, ..., EVn, or elevator fittings E1, E2, ..., En or building fittings B1, B2, ..., Bm to control them via the group control center 0102, PHS or portable telephone 0103 or the information PC 0105.

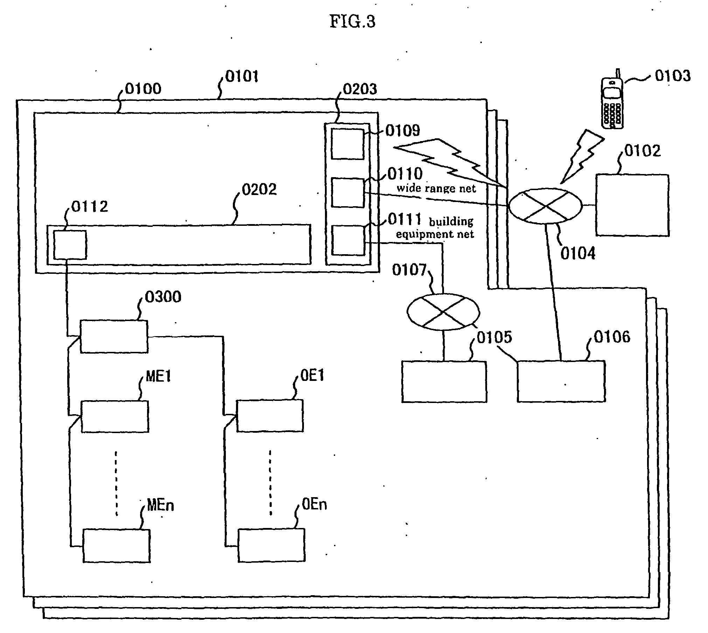

More concrete example of actuation, observation and control of elevators are explained with reference to the accompanying drawing of FIG. 3. The whole construction with respect to observation service comprises at least one or a plurality of control device ME1, ME2, ..., MEn (manufactured by the applicant) are connected to the elevator communication interface unit 0112 of the control unit 0100 or at least one or a plurality of elevators control unit OE1,..., OEn (manufactured by other manufacturer) are connected via the interface conversion 0300. Except the above mentioned construction the rest construction is the same as FIG.1. The elevator observation service issues working information concerning actuation of elevators or expected extraordinary information to the group control center 0102, OHS, or portable telephone 0103, or information PC 0105. Also, the group control center 0102, PHS, or portable telephone 0103 or information PC 0105 issues an optional elevator MEx or OEx from the information PC 0105 through the inter-building network 0107 or the wide range network 0104.. When an optional elevator MEx or OEx detects an extraordinary state, the extraordinary signal of the elevator MEx or OEx is input to the control unit 0100 through the elevator communication interface unit 0112. The extraordinary signal is calculated by the control unit 0100. The extraordinary signal is transferred to the inter-building network interface unit 0111, to the information PC 0105 through the inter-building network 0107, to the building control center 0102 through the wide range network interface device 0110 or wide range network 0104 or PHS or portable telephone 0103. When extraordinary signal of the optional elevator MEx, or OEx is cancelled by the building control center 0102, the building group control center 0102 transfers such cancel signal to the wide range network interface unit 0110 through the wide range network 0104. The cancel signal input to the wide range network interface unit 0110 is calculated by means of central calculation unit 0200 in the control device 0100 and the cancel signal is transferred to the elevator MEx or OEx through the elevator communication interface device 0112.

Next, the calculation performed by the central calculation unit 0200 in the control unit 0100 is explained with reference to the accompanying control block diagram with an example of the elevator supervising service..

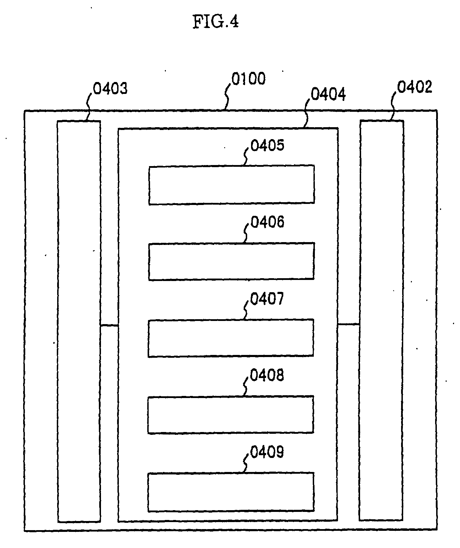

FIG.4 indicates a program performed by the central control unit 0200 housed in the storage unit 0201 in the control device. The program comprises a information communication part 0402, a fittings communication part 0403, a program control performance part 0404, a elevator's observation and control program part 0405, a building installations observation and control program part 0406, a service program part 0407, a home page edition and transfer part 0408 and a plug and play part 0409. The information communication part 0402 is a program provided with a function to input and output a message by communication protocol treatment with the information network 0209 by controlling the information network interface unit 0203. The fittings communication part 0403 is a program provided with a function to issue or receive a message to or from a fitting network 0208 with communication protocol treatment by controlling the fittings network interface unit 0202. A program control and practice part 0404 performs control and practice for the elevator's observation and control program part 0405, the building installations observation and control program part 0406, the service program part 0407, the home page edition and transfer part 0408. The elevator's observation and control program part 0405 performs observation and control actuation for the elevators. The elevator's observation and control program part 0405 is provided with a function of the elevator control board and it is controlled and practiced by the program control and practice part 0404. The building installations observation and control program part 0406 performs observation and control actuation for the building installations. The building installations observation and control program part 0406 is provided with a function of building management controller and it is controlled and practiced by the program control and practice part 0404. The service program part 0407 is a program to control the service or the control unit 0100. The service program part 0407 is a program to perform service or to control the control unit 0100. The service program part 0407 is distributed from the service program control and practice part 0404 through the information network 0209. The service program part 0407 is controlled and practiced by the program control and practice part 0404. Even after installed, the function of the control unit 0100 is reconstructed by distributing the service program from the service program distribution server 0207 and changing the service program part 0407. For instance, it is possible to answer to the specification change such as interlock control. It is also possible to answer to the needs by the users and to be customized. The elevator's observation and control program part 0405, the building installations observation and control program part 0406 the service program part 0407, and the home page edition and transfer part 0408 are all possible to be changed as well as the service program part 0407. The home page edition and transfer part 0408 collects the information of the working status of the elevators EV1, EV2, ..., EVn, or the elevator's fittings E1, E2, ..., En, or the building installations B1, B2, ..., Bm. The home page edition and transfer part 0408 converts and transfer the collected working information to the building group control center 0102, or PHS, or the portable telephone 0203, or the mobile PC, or the information PC 0105. If the transferred control information is a home page format available to internet, it is possible to take it into the man-machine unit 0206 and input a home page style file which is called browser and practice a program provided with a function of display, it becomes possible to observe the information by the ordinary information treatment device such as a personal computer, even without a particular man-machine device for elevators system. The plug and play part 0409 observes the connection status of the elevators EV1, EV2, ..., EVn, or the elevators fittings E1, E2, ..., En, or the building fittings B1, B2, ..., Bm. If connection is performed, the plug and play part 0409 transfers its start of the program to the connected facilities to the program control and practice part 0404. If the separation of the connected facilities is observed, the plug and play part 0409 transfers its completion of the service program to the program control and practice part 0404.

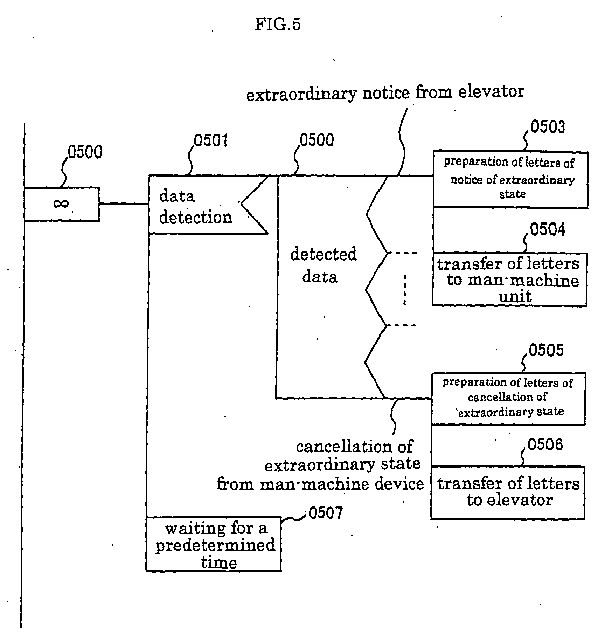

Next, calculation in the elevator observation and control program part 0405 is explained with reference to the PAD block diagram of FIG.5.

(Step 0500) The elevator observation and control program part 0405 repeat the following actuation after it is started.

(Step 0501) Some data are detected if they are transferred from the information communication part 0402 or building fittings communication part 0403.

(Step 0502) When an extraordinary signal from the elevators is detected or an extraordinary status information from the man-machine unit is cancelled, the treatment is diverged.

(Step 0503) If the transferred data detected in the step 0502 is an extraordinary information from the elevators, a telegraphic message is prepared to inform an extraordinary status of the elevators to the man-machine unit.

(Step 0504) In order to transfer the telegraphic message prepared in the step 0503 to the man-machine unit, the telegraphic message is handed to the information communication part 0402.

(Step 0505) If the transferred data detected in the step 0502 is a cancellation notice of the extraordinary status of the elevators from the man-machine unit, a telegraphic message is prepared to transfer such a cancellation of the extraordinary status to the elevator EVx designated by the transferred data.

(Step 0506) The telegraphic message prepared in the step 0505 is handed to the fittings communication part 0403 in order to transfer it to the elevator EVx.

(Step 0507) Waiting for a predetermined time and then returns to the step 0500 once again.

The above treatment indicates a calculation of the elevator observation service in the elevator observation and control program part 0405. The notice of the extraordinary status of the elevators to the man-machine unit is performed and a calculation of cancellation of the extraordinary status of the elevators is made.

The above calculation is one example because the elevator observation and control program part 0405 is changed due to distribution from the service program distribution server 0207.

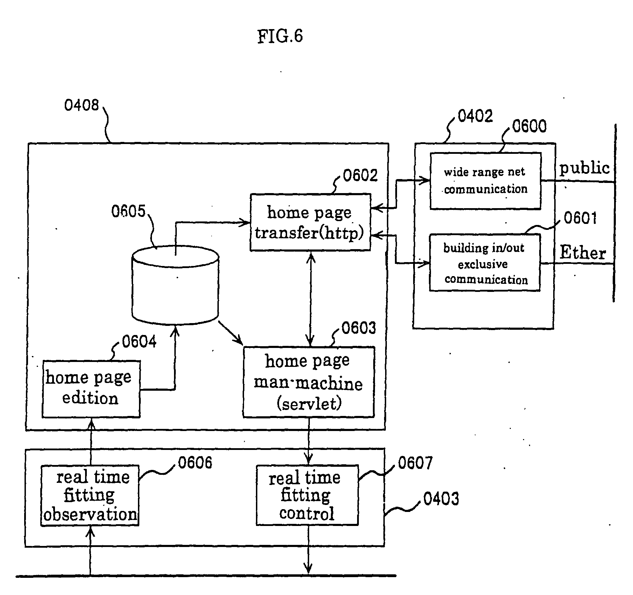

Next, the preparation of home page and calculation to be transferred to the man-machine unit 0206 is explained with reference to the accompanying control and block diagram of FIG.6.

The information communication part 0402 comprises a wide range network communication part 0600 and a building in/out exclusive communication part 0601. The home page edition and transfer part 0408 comprises a home page transfer part 0602, a home page man- machine part 0603, a home page edition part 0604 and a HTML file group part 0605. Except above composition, the information communication part 0402 has the same composition as that of the FIG.4. The fittings communication part 0403 comprises a real time fittings observation part 0606 and a real time fittings control part 0606. The wide range network communication part 0600 communicates to a building group control center 0102, or PHS or the portable telephone 0203 or mobile PC through the wide range network 0104. The building in/out exclusive communication part 0601 communicates with the building group control center 0102, or the information PC 0105 through the in-building network 0107. When the building in/out exclusive communication part 0601 communicates with the building group control center 0102, the dialup router 0106 exists between the in-building network 0601 and the building group control center 0102.

The control unit 0100 in the elevators system performs real time control against the object to be controlled and concurrently automatically converts the information of the control status periodically to home page format. The control unit 0100 also performs calculation corresponding to the request of distribution of the file. In order to observe a information of the controlled status transferred from the real time fittings observation part 0606 through the man machine unit 0206 in the form of home page format, it is necessary to convert the information from the real time fittings observation part 0606 to a file format to publish the information in the home page format. As an example, the information of the control status is converted to a file of HTML (HYPER TEXT MARKUP LANGUAGE). In this case, the home page edition and transfer part 0408 in the program control and practice part 0404 has a server unit function of information distribution in the home page format. The man machine unit 0206 in the elevators system has a function of the client device.

The common type browser in the internet environments takes out the necessary information from the network only once. It is impossible to renew the information again. For this reason, when the information of the control status is converted to the HTML file format, the work is practiced in the man-machine unit 0206 in the elevators system. It is included an output program which demands periodical information distribution to the file in question on the man-machine unit 0206. The home page transfer part 0602 transfers this file to the man-machine unit 0206 and transfer demand from the man-machine unit 0206 is periodically transferred to the control unit 0100 and a picture of the control unit 0100 is renewed.

According to this method, it is not necessary to provide the program concerning the elevators system on the man-machine unit 0206.

In the meantime, as a common communication order between the man-machine unit 0206 of the elevators system and the home page edition and transfer unit 0408, it is necessary to communicate the file according to the treatment program, as an example, HTTP (HYPER TEXT TRANSFER PROTOCOL) program.

The function to indicate the information of the controlled status by the man-machine unit 0206 may not be related with a control object of the control unit 0100. Accordingly, if a common type browser to realize the internet environments is loaded on the ordinary common personal computer it becomes possible to observe the information of the control status even in an ordinary working room.

A home page type file, for instance, the HTML format file can include a tag information to specify the location together with other HTML format file. This tag information is called the URL (UNIVERSAL RESOURCE LOCATON) tag in the HTML format file.

When observing an information of control status of a control unit 0100 through the man-machine unit 0206 in the home page format file, it is possible to directly find and observe the related information in the fixed housing address by one clicking action or to find the housing address by consecutively clicking the similar letters or sentences which indicate a related information in the corresponded housing address in the home page format file.

If the control unit 0100 is divided into several compartments and the observer wants to observe an information of a compartment next to the compartment he is observing now but he does not know the housing address or name of filing of such a compartment, the observer can find the compartment by double clicking the corresponded URL tag on the picture related to the man-machine unit 0206.

The wide range network communication part 0600 is a program to perform a communication protocol treatment by a public network 0304 with PPP and controls the wide range network interface unit 0110. A building in/out exclusive network communication part 0601 controls the inter-building information network interface unit 0111 which is always connected by the Ethernet, etc. and perform a communication protocol treatment with a fittings network 0208.

A home page transfer part 0602 performs the protocol treatment by HTTP. The home page transfer part 0602 transfers a designated home page among the HTML file group 0605 to the man-machine unit 0206 by the demand of home page transfer from the man-machine unit 0206. In case the man-machine unit 0206 demands a home page, the home page transfer part 0602 informs such demands to a home page man-machine part 0603 and then it transfers the handed HTML file from the home page man-machine part 0603 to the man-machine part 0206.

The home page man-machine part 0603 receives a demand from the home page transfer part 0602 and practice the real time fittings control part 0607 corresponding to the fittings. As a result the home page man-machine part 0603 prepare the HTML file or obtain a HTML file from the HTML file group 0605 and to return it to the home page transfer part 0602. The home page edition part 0604 receives various information of the control status from the real time fittings observation part 0606 and periodically convert them to HTML file format and house the information in the HTML file group 0605. When converting the information to the HTML file format, an output program of the periodical information distribution on the man-machine unit 0206 is included and the picture on the man-machine unit 0206 is periodically renewed

Various information of control status in various fittings are housed in the HTML format in the HTML file group 0605.

The real time fittings observing part 0606 is a program to transfer the various information of control status to the home page edition part 0604.

The real time fittings control part 0607 is started by receiving the demand from the home page man-machine part 0603 to transfer the demand to the objects in question through a fittings network 0208.

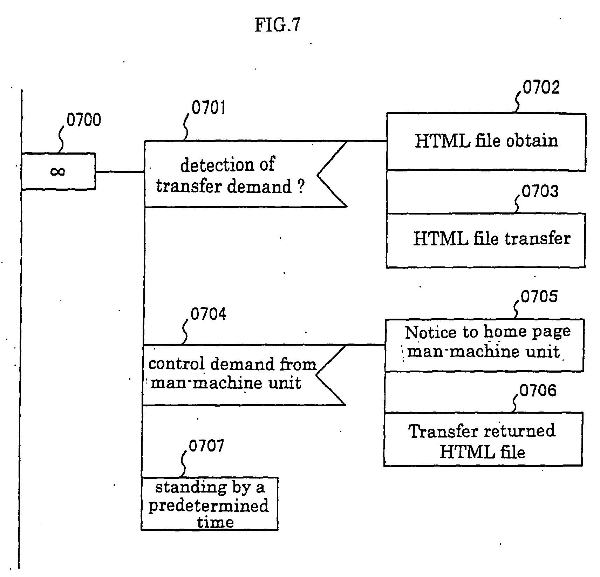

Calculation in the home page transfer part 0602 is explained with reference PAD figure of FIG.7.

(Step 0700) The home page transfer part 0602 is started when it receives the home page transfer demands from the man-machine unit 0206. The home page transfer part 0602 repeats the following treatment. When the man-machine unit 0206 demands the cutting every actuation stops.

(Step 0701) Confirm a demand of the HTML file from the man-machine unit 0206.

(Step 0702) If a reality of demand from step 0206 is confirmed, it is required to take up the demanded HTML file from the man-machine unit 0206 is obtained from the HTML file group 0605.

(Step 0703) The HTML file obtained in the step 0702 is transferred to the information communication part 0402 to transfer to the man-machine unit 0206.

(Step 0704) Confirm a demand from the man-machine unit 0206

(Step 0705) Transfer the control demand received from the step 0704 to the home page man machine part 0603.

(Step 0706) The home page man-machine unit 0603 is practiced in the step 0705. Receive the HTML file as a result of the treatment and transfer the HTML file to the man-machine unit 0206.

(Step 0707) Awaiting a predetermined time and return to the step 0700 once again.

The above mentioned treatment is a calculation in the home page transfer part 0602. The calculation of home page transfer to the man-machine unit 0206 ios carried out.

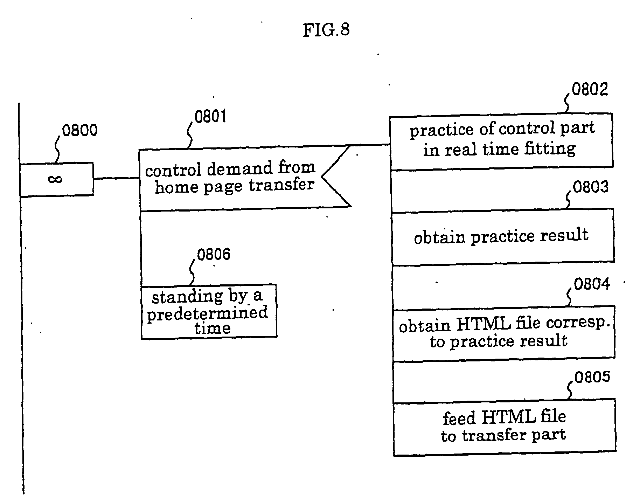

The calculation in the home page man-machine part 0603 is explained with reference to the accompanying PAD drawing of FIG 8..

(Step 0800) The home page man-machine part 0603 is always working.

### The following steps are repeated.

(Step 0801) Confirm if the demand from the treatment 0705 of the home page transfer part 0603 is issued or not.

(Step 0802) If step 801 is confirmed, practice the real time fittings control part 0607 corresponding to the demand obtained from the home page transfer part 0602.

(Step 0803) Receive a practiced result in the real time fitting control part 0607.

(Step 0804) Receive a practiced result in step 0803 and add an output program of periodical information distribution. Receive HTML file from the HTML file group 0605 or prepare.

(Step 0805) In order to transfer to man-machine unit 0206 transfer HTML file received or prepared in step 0804 to home page transfer part 0602.

(Step 0806) Waiting for a predetermined time and then return to step 0700.

The above treatment is a calculation in home page man-machine part 0603. Control in real time fitting control part 0607 and as a result calculation to transfer of home page is performed.

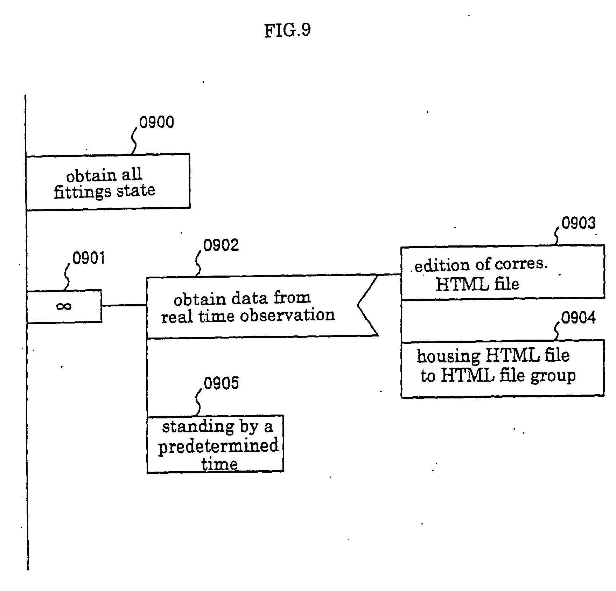

Calculation in home page editor 0604 is explained with reference to the drawing PAD of FIG.9

(Step 0900) Home page editor 0604 is start up and obtain all the information from the real time fitting observation 0606 and prepare HTML file to be indicated in man-machine unit 0206 from the received information and house it in HTML file group 0605.

(Step 0901) Repeat the following steps in step 0902 and after.

(Step 0902) Confirm notices concerning conditions of each fitting received from real time fitting control observation 0606.

(Step 0903) If condition in step 0902 is correct, prepare HTML file corresponding to each of the fittings received alteration notice.

(Step 0904) Housing the HTML file edited in step 0903 into the HTML file group 0605.

(Step 0905) Waiting for a predetermined time and then part 0604 part 0604 return to step 0901.

The above calculation is carried out in home page editing part 0604. The HTML file including records received from the real time fitting control part 0607 are housed in the HTML file group 0605 as HTML file.

By applying the above described widely used man-machine device, a new elevators system to remotely supervise and control the elevators and yet reduces installation cost is offered.

### (Example 2)

In example 2, the building fitting observation service is explained. As all other parts except the building fitting observation service are same as example 1 explanation is omitted. The whole composition in building fitting observation service is same as FIG.1. The contents of building fitting observation service is to transfer a working information of the building fitting Bx or a pre- extraordinary or extraordinary information to the information PC0105 or building other or building group control center 0102 or PHS, or portable telephone 0103 and from the information PC0105, or the building control center 0102 or PHS or portable telephone 0103 to voluntary building fitting BX through the inter-building network 0107 or wide range network 0104. For instance, if a voluntary in-building fitting Bx detects the extraordinary signal, the extraordinary notice signal is transferred to the building control unit 0100 by means of a protocol such as LON, BACNET through the building fitting network interface device 0114 of the building fitting network interface unit 0202. The input extraordinary notice signal is calculated by the central control unit 0200 of the control unit 0100 and result extraordinary notice signal is transferred to the wide range network 0104 through the PHS modem0109 of the building information network interface 0203 or the wide network interface unit 0110, or to in building network 0107 through the in-building network interface unit 0111. The extraordinary notice signal transferred to the wide range network 0104 is transferred to the building group control center 0102 and to the portable telephone 0203. The extraordinary notice signal transferred to the building network 0107 is transferred to the information PC 0105 or the dialup router 0106. The extraordinary notice signal transferred to the dialup router 0106 is transferred to the building group control center 0102 and the potable telephone 0203. The extraordinary notice signal transferred to the information PC 0105 or the building group control center 0102, or PHS or the potable telephone 0103 is treated in each man-machine treatment device and noticed. When an extraordinary state of the voluntary building fitting BX issued the extraordinary notice signal is cancelled by the building group contro center 0102, the building group control center 0102 transfers said extraordinary cancellation signal to the wide range network interface unit 0110 of the control unit 0100 through the wide range network 0104 as an example. The extraordinary cancellation signal input to the wide range network interface unit 0110 is calculated by the central calculation unit 0200 of the control unit 0100 and transfers its cancellation signal to thebuilding fitting Bx in extraordinary state through the building fitting network interface unit 0114.

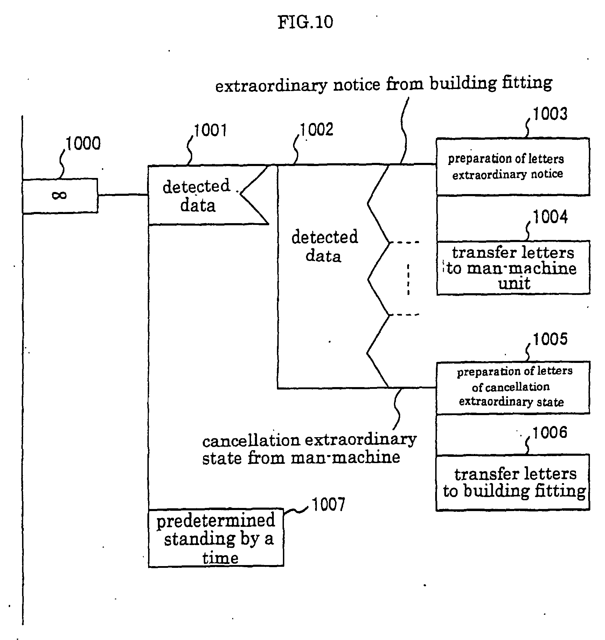

Next, calculation in the building fitting observation and control program ubit 0406 is explained as an example of the central calculation unit 0200 of the control unit 0100 in in the building fitting observation service. The calculation is explained with reference to the accompanying PAD drawing of FIG.10.

(Step 1000) The building fitting observation and control program unit 0111 is started and repeat the following treatment.

(Step 1002) According to the transferred data of the extraordinary notice from the building or cancellation of the extraordinary signal from man-machine, treatment is diverged.

(Step 1003) If the transferred data detected in step 1002 is an extraordinary notice from the building fitting, prepare a sentence to notice such extraordinary state of the building.

(Step 1004) In order to transfer the sentence prepared in step 1003 to man-machine device, it is firstly transferred to the information communication part 0402.

(Step 1005) If the transferred data prepared in step 1002 is a cancellation notice of a extraordinary status from the man-machine, prepare a sentence to notice the cancellation of the extraordinary status of the building fitting.

(Step 1006) In order to transfer the sentence prepared in step 1005 to the building fitting in the extraordinary status, transfer the sentence to fitting communication part 0403.

(Step 1007) Stand by for a predetermined time and then return the step 1000.

The disclosed treatment is a calculation as an example of the building observation service in the building fitting observation and control program part 0406. However, the building fitting observation and control program part 0406 may be changed from the distribution from the service program distribution server 0207. Kindly note that the above calculation is an example.

With the above mentioned treatment a preferable elevators system that can afford to observe and control the building fittings is realized.

### (Example 3)

In example 3, an automatic discrimination and control service when elevators and building fitting are connected is explained Except the automatic discrimination and control service, all of the actuation are the same as the example 2, explanation is omitted.

The control unit 0100 can change its function by down load the service program from the service program distribution server 0207 through the wide range network 0104 when specification is changed or customize the elevators system according to customers proposal.

Automatic discrimination and control service of fittings is a service to be realized by the practice the service program corresponding to fittings by automatically discriminate the connection of the fittings when the fittings are connected.

The automatic discrimination and control service of fittings is explained by indicating a function of the service program distribution of the service program distribution server 0207. The service program distribution server 0207 offers a service to the control unit 0100 connecting to the information network 0209 by distributing the service program 1105. In the secondary storage unit 1100 of the service program distribution server 0207, the service program data 1101, sign data 1102 are previously housed. Distribution of the service program 1105 is practiced by service program creation part 1103 and the service program distribution 1104. The order of distribution is such that the service program creation part 1103 creates the service program 1105 from the service program data 1101 and center sign 1102. The service program distribution 1104 distributes the service program 1105 to the control unit 0100. The service program 1105 comprises the necessary service program data 1106 and the center sign 1107. One service program can afford to include a plurality of service program data 1106 in a single service program.

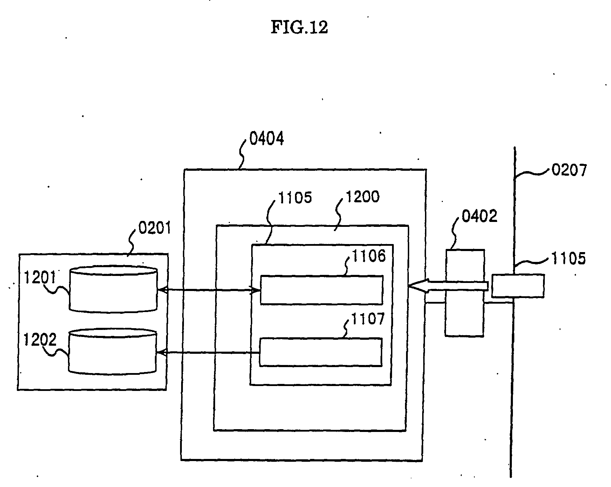

The program control and practice part 0404 in the control unit 0100 is provided with a function to control and practice the service program 0407 distributed from the service program distribution server 0207 through the information network 0209. One example is disclosed in FIG.12. The service program 1105 is distributed from the service program distribution server 0207 and attestation is performed in the center sign attestation part 1200 of the program control and practice part 0404. A certificate 1201 of the service program distribution server 0207 is housed in the storage unit 0201 of the control unit 0100. The center sign attestation part 1200 certifies the Sincerity of the service program 1105 by the center sign 1106 provided with the service program 1105 and the center server certificate 1201 previously housed in the storage unit 0201 of the control unit 0100 when service program is distributed. When attestation work is over the service program 1105 is housed in the service program group 1202 of the storage unit 0201.

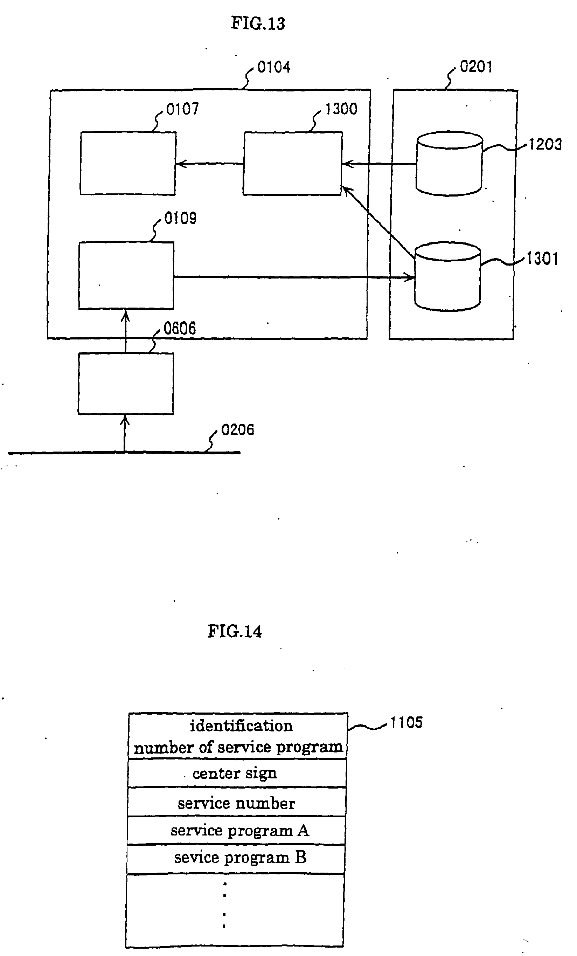

In the FIG.13, a function to automatically recognize connection of the fittings and to practice the service program corresponding to the fittings is explained.

When the elevators EV1, EV2, ..., EVn, the elevators' fittings E1, E2, ..., En, and in-building fittings B1, B2, ..., Bn are connected together through the information network interface unit 0202 by the fitting network such as Lon/BACNet, the real time fitting observation part 0606 detects the connection of the fittings and the plug and play part 0409 prepares data of connected fittings or performs editing. The program practice part 1300 practices the service program part 0407 corresponding to the connected fittings from among the service program group 1202 on the basis of the prepared data 1301. The program practice part 1300 controls the status of practice and sources. Practiced service program performs observation and control of the elevators and building fittings correspondingly to their aims.

In the FIG.14, an example of contents and composition of the service program 0105 is disclosed and explained. The service program 0105 comprises discrimination number of service program, center sign, number of service program and assembly of each service program.

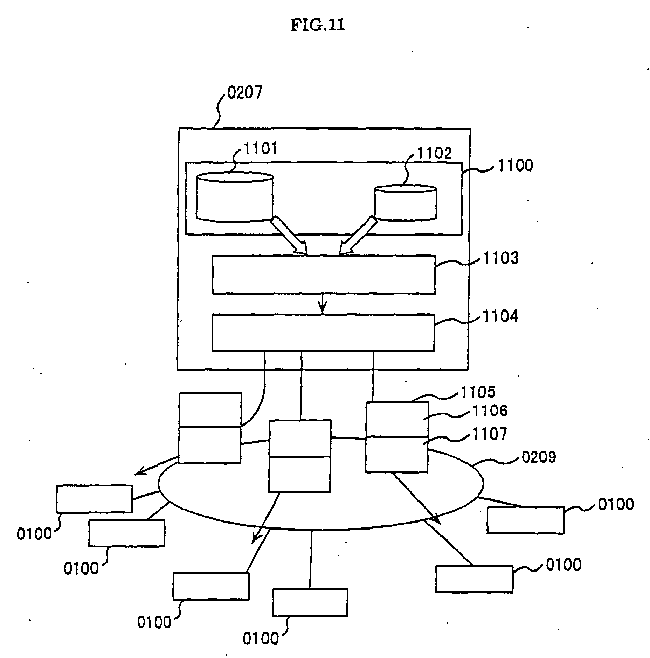

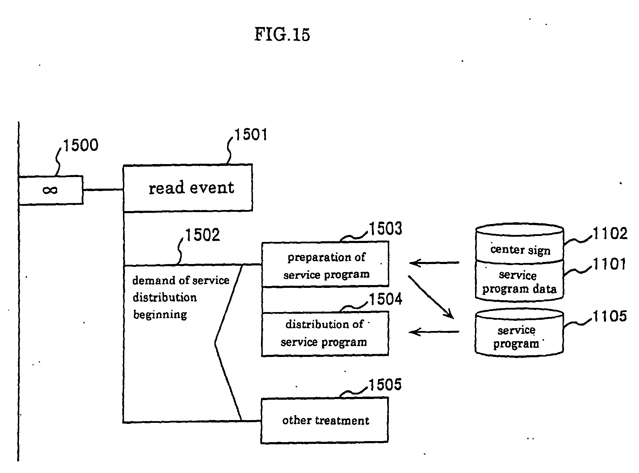

The flow chart of event treatment in the service program distribution server 0207 in FIG.11 is disclosed in FIG.15 to explain its actuation flow is explained.

(Step 1501) Read a event in the event queue.

(Step 1502) If the event is a event to demand start of distribution of service it goes to the treatment 1503. Meanwhile, others go to step 1508.

(Step 1503) The center sign, the number of service included in the service program and the service program body are all merged to create a service program 1105. Goes to step 1504.

(Step 1504) Execute service program distribution treatment in the service program distribution part 1104 and transfer the service program 1105 created in step 1503 to the control unit 0100 in question and return to step 1501.

(Step 1505) Execute other event treatment to be actuated in the service program distribution server 0207 and returns to step 1501.

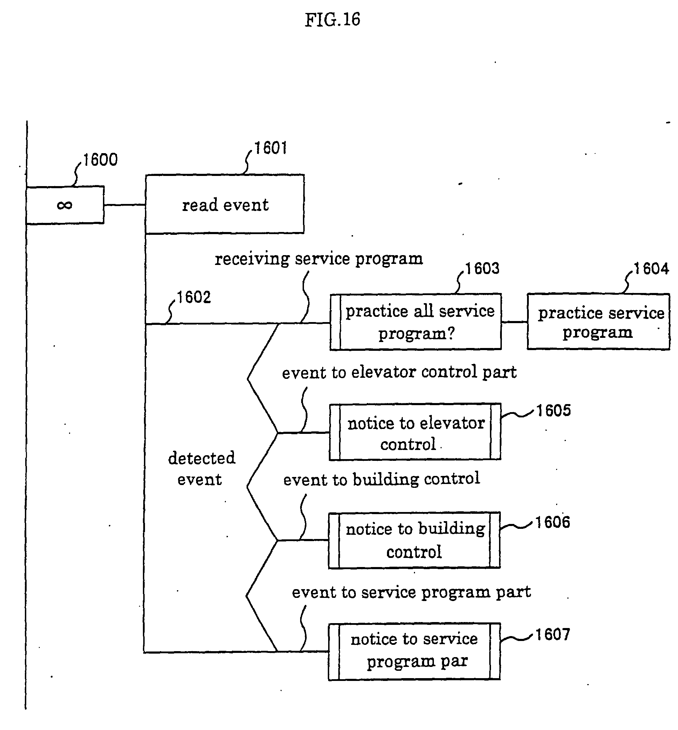

Next, a flow chart of the event treatment routine including the execution treatment of service program in the control unit 0100 is disclosed in FIG.16 to explain a treatment flow as follows:

(Step 1600) Repeat the following treatment when started.

(Step 1601) Read an event from event queue.

(Step 1602) Treatment is diverged according to the event detected.

(Step 1603) If received a service program, discriminate whether all the service programs to be executed are completed or not by the control unit 0100 in question. If all the service programs are executed, go to step 1604. All other programs go back to step 1601. Confirm completion of loop.

(Step 1604) Execute one service program and return to step 1603.

(Step 1605) If there exists a event to the elevator observation and control program part 0405, notice the event to the elevator observation and control program part 0405 and goes to step 1601. A detailed treatment of the elevator observation and control program part 0405 is indicated in FIG.5.

(Step 1606) If there is an event to the building fitting observation and control program part 0406, notice the event to the building fitting observation and control program part 0406 and goes to step 1601 A detailed treatment of the building fitting observation and control program part 0406 is disclosed in FIG.10.

(Step 1607) If there exists an event to the service program part 0407, notice the event to the service program part and goes to step 1601.

With the above mentioned treatment, an elevator system which can afford to materialize an automatic discrimination and control of the fittings in the connection of elevators and building fittings.

### (Example 4)

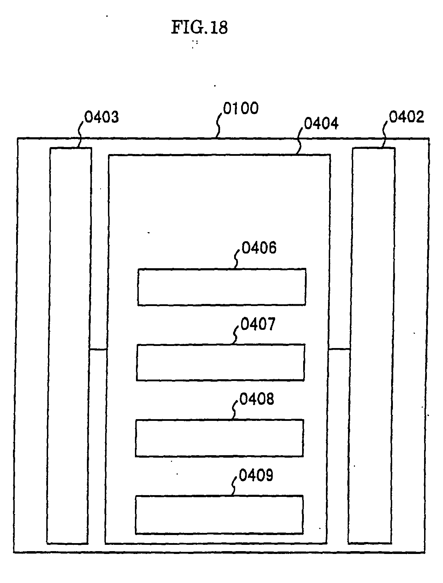

In example 4, an example providing the remote control apparatus of elevators installation with a function to observe and control the building fittings or distribution of building fittings information in building. Except this observation and control function for the building fittings, all of the actuation are the same as the example 3. Explanation is omitted.. The whole construction of the invention comprises addition of a elevator control board communication interface unit 1700 to the apparatus of the present invention and other manufacture's elevator control board OEB1, OEB2, ..., OEBn are connected to the elevator control board communication interface unit 1700 through our elevator control board MEB1, MEB2, ..., MEBn. Except this system, all of the system are the same as the one disclosed in FIG.3. The remote control apparatus for the elevator fittings is provided with a function to observe and control the building fittings or to distribute information of building fittings in building. The elevator control board directly performs control of elevators. For this reason, the calculation executed by the central calculation unit 0200 of the control unit 0100 is a little simplified. As shown in FIG.18, the elevator observation and control program part 0405 becomes unnecessary..

As described above, by providing the elevator fittings remote control apparatus with building fittings observation and control or building fittings information distribution function, it becomes possible to observe and control the elevators or building fittings or distribute information of building fittings by means of widely used man-machine device. A new elevators system which is possible to save installation cost was materialized.

### (Example 5)

Next, a modification method and a control method for the building fittings utilizing a control unit of the elevators installations according to the present invention are explained. The control unit for elevators installations according to the present invention, as explained in the examples, is provided with a function to control and observe the elevators installations on the basis of the information related to the information of the elevators installations or information related to the building fittings. The control unit for the elevators installations according to the present invention is also provided with a communication interface apparatus.

In the case of the new building and new elevators installations or in the case of renewal of these building and elevators installations, the control unit 0100 as shown in FIG.1 is installed to observe and control the elevators EV1, ..., EVn and/or elevator fittings E1, ..., En. The elevators EV1, ..., EVn, elevator fittings E1, ..., En are controlled and observed by the outdoor equipments such as PHS terminal or portable telephone 0103, control center 0102, information PC 0105 through the interface unit 0202, communication interface unit 0203 and communication circuit networks (0104, 0107).

Next, after the control unit 0100 to observe and control the elevators installations is constructed and stated, a modification such as new construction, additional construction or replacement of the building fittings is considered and building fittings B1, ..., Bm are required to be controlled and observed. The building fittings B1, ..., Bm are connected to the building fittings network interface device 0114 in the interface unit 0202 of the control unit 0100. The building fittings B1, ..., Bm are controlled and observed by PHS terminal, portable telephone 0103, control center 0102 or information PC0105 through interface unit 0114, communication interface unit 0203, network (0104, 0107). Namely, the building fittings B1, ..., Bm are controlled by means of already constructed elevators installations control unit 0100 without addition of new control device.

The function to control and observe the building fittings B1, ..., Bm is transferred to the control unit 0100 by distributing the service program from outside device such as the control center 0102 to the control unit 0100. The distribution method of the service program is the same as the one disclosed in FIG.11.

According to the examples of the present invention many building fittings already constructed are all utilized when the building fittings are modified or reconstructed. The building owner or the users can receive various control and observation services through the building control center. Additional control center is not required. Maintenance suppliers are expected to add new additional control equipments. Additional or renewal control and observation unit are required when reconstruction of the buildings becomes necessary

### (Example 6)

In example 6, construction site of the control unit for the elevators installations and examples of the use of the elevator's network for the control and/or observation for the building fittings are explained.

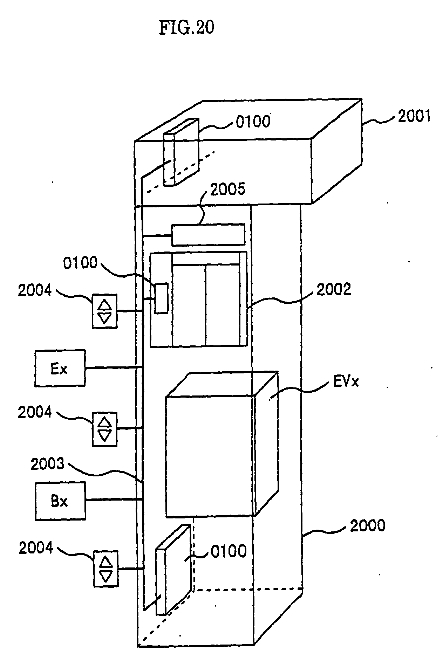

FIG.20 shows a whole composition. This example comprises an up and down passage 2000, machine room 2001 three-way frame 2002, elevator network 2003,, bell for elevator, indicator 2005. In the selected case the machine room is not necessary.

The control unit 0100 is mounted in up and down passage, in machine room 2001 or three-way frame 2002. An elevator network 2003 extends from the control unit 0100. The elevator network is connected to a elevator bell and indicator 2005. The elevator fittings E1, E2, ..., En, and building fittings B1, B2, ..., Bm are connected to the elevator network 2003.

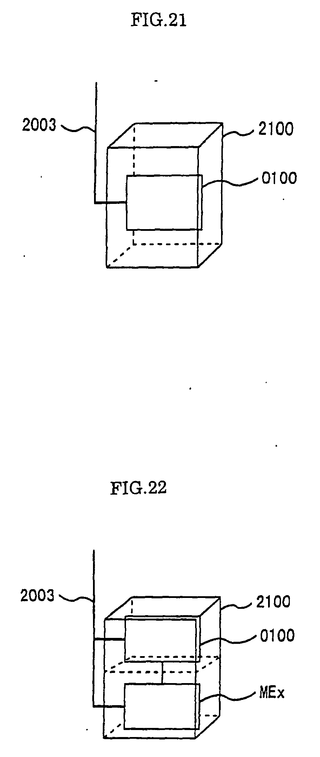

FIG.21 and FIG.22 are example of the control unit 0100 installation. FIG.21 is a case that the control unit 0100 is provided a function to control elevators. FIG.22 is a case that the control unit 0100 is not provided with a function to control elevators. In FIG.21 the control unit 0100 is housed in a housing 2100 or in the three-way frame 2002. In FIG.22 the elevator control board MEx is separated. The housing 2100 or the three-way frame 2002 are also can be separated as shown with broken lines.

The control unit 0100 for elevators installations can be provided to the up and down passage 2000, the machine room 2001 or the three-way frame 2002 like conventional elevator control/elevator remote observation and control device. It is not required to add new additional space for control and observation for the building fittings. Less construction space, less working time and less working cost at actual working site can be offered by the system according to the present invention.

## Claims

1. A control unit for elevators installations including a means to control and/or observe the elevators installations on the basis of the information related to said elevators installations including elevators and/or the control unit for the elevators, and/or elevators fittings is **characterized in that** said means to control and/or observe said elevators installations performs to control and/or observe said building fittings on the basis of the information related to the building fittings installed in said buildings.

2. A control unit for elevators installations according to claim 1,wherein said means to control and/or observe said elevators installations prepares a home page related to said elevators installations to indicate in a man-machine device on the basis of the information related to said elevators installations,, as well as prepares a home page related to said building fittings on the basis of the information related to said building fittings.

3. A control unit for elevators installations according to claim 1, wherein a function to control and/or observe said building fittings is transferred to the means to control and/or observe said elevators installations from outside devices.

4. A control unit for elevators installations to control and/or observe said building fittings on the basis of an output signal from other interface device, wherein a treatment device is provided with following devices,
an interface device to connect the elevators installations including elevators and/or elevators fittings provided in building,
a treatment device to perform a treatment to control and/or observe said elevators installations on the basis of the output signal of the interface device, and
other interface device to connect the building fittings provided in said building,

5. A control unit for the elevators installations according to claim 4,. wherein the treatment device is **characterized in that** said treatment device is provided with a storage means to store a program to control and/or observe said elevators installations and a program to store a program to control an/or observe said building fittings, as well as a calculation means to perform a calculation to control and/or observe said elevators installations and a calculation means to control and/or observe said building fittings.

6. A control unit for elevators installations according to claim 4 or claim 5, wherein said control unit for elevators installations is **characterized in that** said control unit for elevators installations is provided with a communication interface device to connect outside devices, said treatment device prepares a home page format data with respect to said elevators installations to be indicated in the man-machine devices belonging to outside devices on the basis of the output signal from the interface device, and prepare a home page format data with respect to said building fittings to be indicated I said man-machine device on the basis of the output signal from other interface device, and the home page format data with respect to said elevators installations and building fittings are distributed to outside devices through said interface device.

7. A control unit for the elevators installations according to claim 5, wherein said control unit is provided with a communication interface device to connect with outside devices, and a program to control and/or observe said building fittings is transferred from the outside devices through said communication interface.

8. A control unit for the elevators installations provided with a means to control and/or observe said elevators installations on the basis of the information with respect to the control device for the elevator and/or the elevators fittings provided in buildings, said control unit for elevators installations is **characterized in that** said control unit controls and/or observes said building fittings by connecting said building fittings constructed in building to said control unit, after said control unit to control and/or observe said elevators installations after said control unit is provided in the building.

9. A modification method of the building fittings **characterized in that** the modification method comprises :
first step to construct new building, to add the building or replacing old building to the new one,
second step to connect the modified building fittings to the control unit of the elevators in addition to controlling and observing the elevators and/or fittings with elevators and controlling and observing the building fittings, and
third step to provide said control unit with the function to control and/or observe the modified building fittings through the outside devices.

10. A modification method of the building fittings **characterized in that** the modification methods comprises:
first step to construct new building, to add the building or replacing old building to the new one,
second step to control and/or observe the elevators installations including elevators and/or elevators fittings and control and/or observe the building fittings according to the program and connect to the control unit of the building installations previously added to the buildings,
third step to transfer the program to control and observe said modified building to said control unit from outside

11. A modification method for the building fittings **characterized in that** the modification method comprises,
first step to control and/or observe the elevators installations with a function to control and/or observe said elevators installations on the basis of the information related to elevators installations including the elevator and/or control device for the elevators and /or elevators fittings,, with a function to control and/or observe the building fittings on the basis of the information of the building fittings and further providing a communication interface device to connect the outside device and an outside device in the control device through communication circuit to communicate to the communication interface device ,
second step to connect the elevators installations and said control unit after said installations and the unit are constructed in building and the building fittings to be connected to the control device.
third step to control and/or observe the building fittings by the outside device through the communication circuit to the communication interface device.

12. An elevator system including elevators and elevators fittings and a control unit to control and/or observe said elevators installations and the control unit is the one described in one of the claims from claim 1 to claim 8

13. An elevator system **characterized in that** the elevator system is provided with an air-conditioner facilities, illumination facilities, fire -proof facilities crime prevention facilities provided with communication interface communication with the elevators control unit or the remote control apparatus of the elevator fittings and provided with a function to observe and control of the in-building various fittings, in addition to the control unit for elevators and the remote controller of the elevator fittings The elevators system according to the present invention provides a communication interface to the control unit for the elevator and the remote controller of the elevator fittings which connects them to the building group control device outside the building. The present invention offers the elevators system to control the building group control system based on the elevators system.

14. An elevator system including a control unit for elevators, remote observation and control unit for the elevator fittings, in-building air-conditioner, illumination facilities, fire-proof facilities, crime prevention facilities with communication interface facilities to provide a function to observe and control the building fittings in addition to a function to observe and control the building fittings is **characterized in that** the elevator system is provided with the means to notify the connection status of the elevators control device or elevators fitting remote control device, to be connected each other through the communication interface with the in-building fittings., a control means to control in-building fittings and a means to control in-building fittings, a means to automatically start up and transfer the service program to the control device of the elevator or remote controller of the elevators fittings in accordance with supporting devices outside the building.
